Europäisches Patentamt

European Patent Office

Office européen des brevets

(19)

(11) Publication number: **0 033 575**
**B1**

(12)

# EUROPEAN PATENT SPECIFICATION

(45) Date of publication of patent specification: **21.09.83**

(21) Application number: **81200121.2**

(22) Date of filing: **29.01.81**

(51) Int. Cl.³: **B 01 D 3/06,** B 01 D 1/26,
C 02 F 1/06

(54) **Multi-stage expansion evaporator.**

(30) Priority: **05.02.80 NL 8000704**

(43) Date of publication of application:
**12.08.81 Bulletin 81/32**

(45) Publication of the grant of the patent:
**21.09.83 Bulletin 83/38**

(84) Designated Contracting States:
**DE FR GB IT**

(56) References cited:
**BE - A - 679 476**
**US - A - 3 329 583**

(73) Proprietor: **ESMIL B.V.**
**De Boelelaan 7 P.O. Box 7811**
**NL-1008 AA Amsterdam (NL)**

(72) Inventor: **Klaren, Dick, Gerrit, Dr. Ir.**
**Rubensplantsoen 2**
**Hillegom (NL)**

(74) Representative: **Zuidema, Bert, Ir. et al,**
**p/a HOOGOVENS GROEP B.V. P.O. Box 10.000**
**NL-1970 CA IJmuiden (NL)**

Courier Press, Leamington Spa, England.

## Multi-stage expansion evaporator

The invention relates to a multi-stage expansion evaporator, in particular one of the type having a plurality of stages each comprising a heat exchanger chamber in open connection with an evaporation chamber, with series counterflow circulation, liquid being heated as it flows in one direction through a heat exchanger conduit, the last passing through the heat exchanger chambers and being evaporated as it flows in counterflow through the evaporation chambers.

Multi-stage expansion evaporators have been proposed in which both heat exchangers and evaporation chambers are arranged in horizontal series, while others are proposed where the heat exchangers and evaporation chambers are arranged vertically in the direction of circulation. In the case of the latter, vertical type of evaporator, it has been proposed to maintain a fluidised granular bed within the heat exchanger tubes during operation. See NL-A-75.05869. The invention relates to this latter type of multi-stage expansion evaporators, and hence it will be explained below with reference to the "vertical multi-stage expansion evaporator" type with fluidised bed heat exchanger.

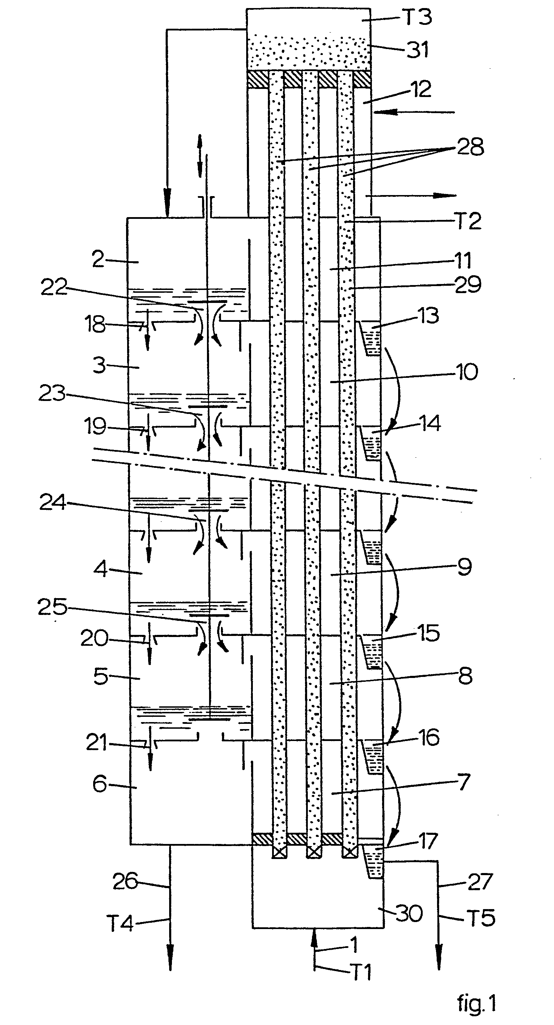

An outline diagram of a vertical evaporator with fluidised bed heat exchanger appears in Fig. 1 of the accompanying drawings. This apparatus is arranged like a counterflow heat exchanger. A pure or impure feed is supplied at point 1 at a temperature T1 and is gradually heated up to a temperature T2 on passing in series through the closed conduits of heat exchangers 7, 8, 9, 10 and 11. These heat exchanger chambers are in open connection with evaporation chamber 2, 3, 4, 5 and 6, heat exchanger 7 being connected to chamber 6, heat exchanger 8 to chamber 5, etc. External heat is supplied to the system by means of a heat exchanger 12 in which the feed is increased to a temperature T3 before it travels to a discharge chamber 31. The heated feed then flows from the discharge chamber 31 through the evaporation chambers 2 to 6 consecutively, a part of the feed evaporating in each evaporation chamber and heat being transferred to the rising feed by condensation of moisture in heat exchanger 7 to 11. The condensate forming in the heat exchangers is collected in troughs 13 to 17 which overflow into each other. The non-evaporated feed flows through permanent throttle openings 18, 19, 20 and 21, and possibly partly through variable throttle openings 22, 23, 24 and 25 from chamber to chamber. Flows of (a) residual feed and of (b) the condensate formed leave the system at points 26 and 27 at temperatures T4 and T5.

The feed of such expansion evaporators commonly consists mainly of water. While reference will usually be made below to water or water vapour, the invention should be regarded as being applicable to other fluids and their vapours.

In the particular known embodiment described here, the heat exchangers 7 to 12 comprise a number of vertical tubes 28 which are filled with particles 29. When the apparatus is operating, the particles 29 are kept fluidised. Various measures have been proposed to ensure that fluidisation occurs uniformly in all tubes as the feed water circulates from a distributor box 30 to the discharge chamber 31.

Particularly when a fluidised bed is used in the heat exchanger tubes 28, only small variations are permissible in the speed at which the feed water flows through the tubes, though even in multi-stage expansion evaporators of a type where no fluidised bed is used, the aim must still be relatively little variation in the speed of flow, in the interests of optimum operation.

If the flow speeds in the tubes 28 are too low, the fluidised bed will drop so far down the tubes 28 that part of the heat-transferring surface of these tubes is no longer in contact with the fluidised particles 29, which is detrimental to heat transfer rates. If the feed water flows too fast in the tubes 28 the granulate will be rinsed out of the discharge chamber 31.

Various conditions may lead to major fluctuations in the liquid level in the evaporation compartments 2 to 5. For example, this may happen when the apparatus is started up (when there are as yet no differences in vapour pressure as between the chambers) or when the heat supplied to heat exchanger 12 is altered (so that the differences in vapour pressure between the evaporation chamber may change).

In order nevertheless to keep the liquid level in each of the evaporation chambers within limits acceptable for operational purposes, various measured solutions have been proposed. In one known solution of the problem, permanent throttle openings 18 to 21 are provided in addition to variable throttle openings 22 to 25 in at least some of the partition walls between the compartments 2 to 6 (see Fig. 1). The closing mechanisms of the variable throttle openings can be coupled for driving to an adjusting mechanism which can be moved from outside the evaporator. With an increasing number of evaporator chambers, these coupled closing mechanisms can lead to the apparatus becoming complicated. In practice, 30 to 40 evaporator chambers linked in series have already been adopted, and this number can be expected to increase yet further in the future.

It has also been proposed that consecutive evaporator chambers be connected to each other via exterior syphons. When the fluid rises above a certain level in an evaporation chamber, the chamber then empties into the next chamber via the syphon. However, syphons are expensive in evaporators with many stages, while they give rise to structural difficulties if the height of the evaporator chambers is reduced.

The object of the invention is to achieve sufficient control of the fluid level in the evaporation compartments of a multi-stage expansion evaporator, in a simple structure.

In essence, the invention consists of a circulation conduit from the discharge chamber, provided with a control valve and connected to a selected evaporation chamber in the second half of the evaporator in the direction of flow of the liquid through the evaporation chambers, and a control valve (33) in said circulation conduit (32), and wherein the stages are located one above another and said heat-exchange conduit comprises in each stage, a plurality of pipes containing particles fluidisable in the flow of liquid.

In this way, excessive levels in certain evaporation chambers can be avoided by conveying part of the water through the circulation conduit, so that the remaining quantity of feed water still flowing through these chambers does not produce an excessive level in them. It is then no longer necessary to fit adjustable throttle openings in the partition walls, in addition to the fixed throttle openings, nor to provide syphons between consecutive evaporation compartments.

As remarked above, a circulation conduit connects a discharge chamber to one of the evaporation chambers in the second half of the evaporator (in the direction of flow of the liquid through the evaporation chambers), and preferably this selected chamber is among the last 30% or even 20% of the chambers.

US—A—3,329,583 describes a multi-stage evaporator in which a by-pass line can convey a proportion of the feed from the top of the heat exchanger column directly to an intermediate evaporation chamber. The arrangement shown differs from the present invention (a) in that the feed is drawn off prior to application of external heat (i.e. before the discharge chamber of the present invention) (b) in that the evaporation chamber to which the feed is taken by this by-pass line is not one of the last evaporation chambers and (c) in that the purpose of the use of the by-pass line is to achieve more efficient utilization of heat.

It is known among experts in this field that the liquid levels in the chambers of a multi-stage expansion evaporator are less sensitive to variation the lower the operating temperature in the chamber, i.e. in a vertical evaporator the lower the evaporation chamber is located in the column. The consequence is that the circulation conduit of the invention need not necessarily be linked to the lowest evaporation chamber. If the liquid levels of chambers located lower permit, the circulation conduit can be connected to a chamber located above the lowermost. In a given situation, the liquid levels can then be distributed to best effect by means of the control valve in the circulation conduit. If satisfactory controllability cannot be achieved in this way, it is also possible for several circulation conduits to be connected to various evaporation chambers through separate control valves. This will generally produce more favourable energy consumption in the installation. A similar effect can also be obtained if several circulation conduits are connected by a common main conduit to the water discharge chamber.

It should be noted that these circulation conduits do not restrict the structural height of the evaporation compartments. The proposed apparatus with circulation conduit and control valve can be built up from standard elements, which produces a structurally simpler and, above all, cheaper approach, even if the number of evaporation chambers is very high.

It will be clear that control of the liquid levels in the evaporation chambers with the aid of control valves lends itself very readily to automation. Automation can then be achieved, in the manner which will be clear to the expert, based on measurement of the levels in the most critical of the evaporation chambers.

When feed water is supplied through the circulation conduit, the chamber or chambers which are connected to this conduit will produce a larger quantity of vapour than the adjoining chambers, which are not connected to the circulation conduit. This gives rise to a high vapour pressure in the chamber to which the circulation conduit is connected and therefore to a smaller difference in vapour pressure between this chamber and the preceding one in the direction of flow, so that the flow of liquid in the latter preceding chamber can be inhibited. This can then, in turn, produce an excessive liquid level in the said preceding evaporation chamber. This difficulty can be dealt with in practice in the invention by making the heat exchanger of the stage containing the evaporation chamber connected to a circulation conduit with a larger heat-exchanging surface than other heat exchangers in the apparatus. As a rule, this will mean a greater structural height of the heat exchanger and evaporation chamber involved. By this measure, the pressure in this evaporation chamber can be lower. Another possible way of preventing an excessive liquid level in the preceding evaporation chamber consists in fitting a secondary circulation pipe between the evaporation chamber to which a circulation conduit is connected and the preceding evaporation chamber in the direction of flow of the evaporating liquid. The secondary circulation pipe can be in the form of a syphon. The length needed for this syphon can be reduced by fitting a control valve in the secondary circulation conduit. However, the secondary circulation conduit may not be a

syphon, but can be equipped only with a control valve. This secondary circulation pipe can be fitted either at the outside or inside of the apparatus.

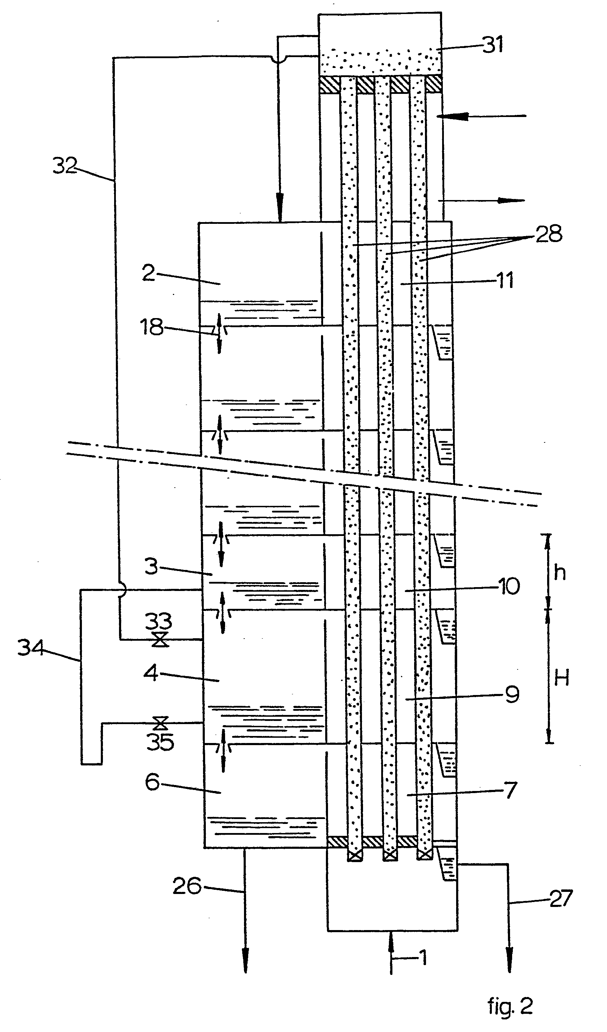

The preferred embodiment of the invention will now be described by way of example with reference to Fig. 2 of the accompanying drawings which is a diagrammatic representation of the multi-stage expansion evaporator of the invention. In Fig. 2, the same reference numerals are used as in Fig. 1, to denote corresponding parts, and these parts will not be described again.

In principle Fig. 2 shows the same apparatus as Fig. 1, corresponding reference numbers relating to corresponding structural elements. However, the variable throttle openings 22 to 35 are omitted from the structure of Fig. 2. Instead, a circulation pipe 32 is fitted between the discharge chamber 31 and evaporation chamber 4, and contains a control valve 33. Chamber 4 is, as illustrated, the penultimate chamber in the sequence, but in practice there will usually be many more stages and the chamber selected for connection of the circulation conduit may be another one. The height H of the heat exchanger 9 and the evaporation chamber 4 is greater than the height h of the adjoining heat exchanger and evaporation chamber 10 and 3 which have a height h. This prevents the liquid level in evaporation chamber 3 from rising too high, as discussed above.

Instead of using this difference in height, the level in evaporation chamber 3 can also be controlled by means of a secondary circulation pipe 34 between chambers 3 and 4. This secondary circulation pipe can take the form of a syphon (as drawn), and a control valve 35 can also be fitted to it. It should be noted that it is, of course, possible for the circulation pipe 34 not to be in syphon form and to have only a control valve 35 fitted in it, while these measures may, further, be combined separately or jointly with a difference in height between chambers 3 and 4.

It should further be noted that the most advantageous operation can be achieved if the circulation pipes 32 and 34 are closed off during normal stable operation. Then a correction may be applied only on a change in the stable operation, by causing liquid to flow through the pipe 32 and, possibly also through the pipe 34.

## Claims

1. Multi-stage expansion evaporator having a plurality of stages each comprising an evaporation chamber (2, 3, 4, 6) and a heat exchanger chamber (7, 9, 10, 11) in open communication with each other and a heat exchanger conduit (28) extending through the heat exchanger chambers to form a path for flow of liquid being heated in one direction through the sequence of stages, the evaporation chambers being connected together to form a path for flow of liquid being evaporated in the opposite direction through the sequence of stages, there being a discharge chamber (31) for the heated liquid from the heat exchanger conduit and means for controlling the liquid level in the evaporation chambers, characterized in that: said means for controlling liquid level comprise at least one circulation conduit (32) connecting the discharge chamber (31) to a selected evaporation chamber in the second half of the evaporator in the direction of flow of the liquid through the evaporation chambers, and a control valve (33) in said circulation conduit (32), and wherein the stages are located one above another and said heat-exchange conduit comprises in each stage, a plurality of pipes containing particles fluidisable in the flow of liquid.

2. An evaporator according to claim 1 having at least ten stages wherein said selected stage is one of the four stages adjacent said first stage.

3. An evaporator according to claim 1 or 2 having a plurality of said circulation conduits, each with a said control valve, and each connected respectively to one out of a plurality of said selected stages.

4. An evaporator according to claim 3 wherein said plurality of circulation conduits are connected into said discharge chamber as a common conduit which is subsequently branched.

5. An evaporator according to any one of claims 1 to 4 wherein the heat exchanger surface of the said selected stage to which the circulation conduit is connected has a larger effective area than the heat exchanger surface of stages to which a said circulation conduit is not connected.

6. An evaporator according to any one of claims 1 to 5 wherein a secondary circulation conduit (34) connects the evaporation chamber of said selected stage to the evaporation chamber of the next preceding stage in the sequence in the direction from final stage to first stage.

7. An evaporator according to claim 6 wherein said secondary circulation conduit is in the form of a syphon.

8. An evaporator according to one of claims 6 and 7 wherein said secondary circulation conduit has a control valve for control of fluid flow therethrough.

## Patentansprüche

1. Mehrstufiger Entspannungsverdampfer, mit einer Vielzahl von Stufen, die jeweils eine Verdampfungskammer (2, 3, 4, 6) und eine Wärmeaustauscherkammer (7, 9, 10, 11) in offener Verbindung miteinander aufweisen, mit einer Wärmeaustauscherleitung (28), die sich durch die Wärmeaustauscherkammern erstreckt und einen Strömungsweg bildet, damit beheizte Flüssigkeit in einer Richtung durch die Folge von Stufen strömen kann, wobei die Verdampfungskammern miteinander verbunden sind und einen Strömungsweg bilden, so daß die verdampfte Flüssigkeit in der entgegengesetzten Richtung durch die Folge von Stufen strömen kann, mit einer Auslaßkammer (31) für die beheizte Flüssigkeit aus der Wärmeaustauscherleitung und mit einer Einrichtung zur Steuerung des Flüssigkeitspegels in den Verdampfungskammern, dadurch gekennzeichnet, daß die Einrichtung zur Steuerung des Flüssigkeitspegels mindestens eine Zirkulationsleitung (32), welche die Auslaßkammer (31) mit einer gewählten Verdampfungskammer in der zweiten Hälfte des Verdampfers in Strömungsrichtung der Flüssigkeit durch die Verdampfungskammern verbindet, und ein Steuerventil (33) in der Zirkulationsleitung (32) aufweist und daß die Stufen übereinander angeordnet sind und die Wärmeaustauscherleitung in jeder Stufe eine Vielzahl von Rohren aufweist, welche in der Flüssigkeitsströmung fluidisierbare Teilchen enthalten.

2. Verdampfer nach Anspruch 1 mit mindestens 10 Stufen, dadurch gekennzeichnet, daß die gewählte Stufe einer der vier Stufen ist, die an die erste Stufe angrenzen.

3. Verdampfer nach Anspruch 1 oder 2, dadurch gekennzeichnet, daß eine Vielzahl von Zirkulationsleitungen vorgesehen ist, die jeweils mit einem Steuerventil versehen und jeweils an jeweils eine aus der Vielzahl von gewählten Stufen angeschlossen sind.

4. Verdampfer nach Anspruch 3, dadurch gekennzeichnet, daß die Vielzahl von Zirkulationsleitungen mit der Auslaßkammer als gemeinsamer Leitung verbunden sind, die sich anschließend verzweigt.

5. Verdampfer nach einem der Ansprüche 1 bis 4, dadurch gekennzeichnet, daß die Wärmeaustauscheroberfläche der gewählten Stufe, mit der die Zirkulationsleitung verbunden ist, eine größere effektive Fläche als die Wärmeaustauscherfläche der Stufen aufweist, an die keine Zirkulationsleitung angeschlossen ist.

6. Verdampfer nach einem der Ansprüche 1 bis 5, dadurch gekennzeichnet, daß eine zweite Zirkulationsleitung (34) die Verdampfungskammer der gewählten Stufe mit der Verdampfungskammer der nächstvorhergehenden Stufe in der Folge in der Richtung von der Endstufe zur ersten Stufe verbindet.

7. Verdampfer nach Anspruch 6, dadurch gekennzeichnet, daß die zweite Zirkulationsleitung die Form eines Syphons besitzt.

8. Verdampfer nach Anspruch 6 oder 7, dadurch gekennzeichnet, daß die zweite Zirkulationsleitung ein Steuerventil zur Steuerung der hindurchgehenden Fluidströmung aufweist.

**Revendications**

1. Evaporateur par détente instantanée à étages multiples comprenant plusieurs étages qui comportent chacun une chambre d'évaporation (2, 3, 4, 6) et une chambre d'échangeur thermique (7, 9, 10, 11) en communication ouverte entre elles et une conduite d'échangeur thermique (28) passant par les chambres d'échangeurs thermiques pour former un circuit de circulation d'un liquide chauffé dans un sens par la séquence des étages, les chambres d'évaporation étant reliées ensemble pour former un trajet de circulation du liquide évaporé dans le sens opposé par la séquence des étages, une chambre de décharge (31) étant prévue pour le liquide chauffé provenant de la conduite d'échangeur thermique ainsi qu' un dispositif pour contrôler le niveau du liquide dans les chambres d'évaporation, caractérisé en ce que le dispositif de commande de niveau de liquide comporte au moins une conduite de circulation (32) reliant la chambre de décharge (31) à une chambre d'évaporation choisie dans la seconde moitié de l'évaporateur dans le sens de circulation du liquide par les chambres d'évaporation, et une vanne de commande (33) dans ladite conduite de circulation (32), et dans lequel les étages sont situés l'un au-dessus de l'autre et ladite conduite d'échange thermique comporte à chaque étage plusieurs tubes contenant des particules fluidifiables dans le courant de liquide.

2. Evaporateur selon la revendication 1, comprenant au moins dix étages, dans lequel ledit étage choisi est l'un des quatre étages voisins du premier étage.

3. Evaporateur selon la revendication 1 ou 2, comprenant plusieurs desdites conduites de circulation avec chacune ladite vanne et reliées chacune respectivement à l'un parmi plusieurs desdits étages choisis.

4. Evaporateur selon la revendication 3, dans lequel lesdites plusieurs conduites de circulation sont reliées dans ladite chambre de décharge comme une conduite commune qui est branchée ensuite.

5. Evaporateur selon l'une quelconque des revendications 1 à 4, dans lequel la surface d'échangeur thermique dudit étage choisi sur lequel la conduite de circulation est reliée à une surface effective plus grande que la surface d'échangeurs thermiques des étages auxquels ladite conduite de circulation n'est pas reliée.

6. Evaporateur selon l'une quelconque des revendications 1 à 5, dans lequel une conduite de circulation secondaire (34) relie la chambre d'évaporateur dudit étage choisi avec la chambre d'évaporation de l'étage qui précède immédiatement dans la séquence, dans le sens de l'étage final au premier étage.

7. Evaporateur selon la revendication 6, dans lequel ladite conduite de circulation secondaire se présente sous la forme d'un siphon.

8. Evaporateur selon l'une des revendications 6 et 7, dans lequel ladite conduite de circulation secondaire comporte une vanne de commande pour contrôler la circulation du fluide qui y passe.

0 033 575

fig.1

fig. 2